# EUROPEAN PATENT SPECIFICATION

(11) **EP 3 294 021 B1**
(45) Date of publication and mention of the grant of the patent: **11.03.2020**
(21) Application number: 15896776.0
(22) Date of filing: 30.06.2015
(51) Int. Cl.: H04L 5/00, H04W 76/14, H04W 72/04, H04W 8/00

(54) **METHOD FOR DATA TRANSMISSION AND RELATED DEVICE**
VERFAHREN ZUR DATENÜBERTRAGUNG UND ZUGEHÖRIGE VORRICHTUNG
PROCÉDÉ DESTINÉ À UNE TRANSMISSION DE DONNÉES ET DISPOSITIF ASSOCIÉ

(43) Date of publication of application: 14.03.2018
(73) Proprietor: Huawei Technologies Co., Ltd., Longgang District Shenzhen, Guangdong 518129 (CN)
(72) Inventor: WANG, Da, Shenzen Guangdong 518129 (CN); WANG, Jian, Shenzen Guangdong 518129 (CN)
(74) Representative: Gill Jennings & Every LLP
(86) International application number: PCT/CN2015/082881
(87) International publication number: WO 2017/000245

(56) References cited:
- WO-A1-2015/064442
- CN-A- 103 686 753
- CN-A- 103 686 985
- US-A1- 2011 051 749
- US-A1- 2013 010 661
- US-B1- 8 520 695
- CATT: "Further discussion on resource allocation for D2D discovery", 3GPP DRAFT; R1-140098, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735664, Retrieved from the Internet: URL:http://www.3gpp.org/ftp/Meetings_3GPP_ SYNC/RAN/RAN1/Docs/ [retrieved on 2014-02-09]
- ZTE: "Discussion of D2D Discovery", 3GPP DRAFT; R1-133149 D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716361, Retrieved from the Internet: URL:http://www.3gpp.org/ftp/tsg_ran/WG1_RL 1/TSGR1_74/Docs/ [retrieved on 2013-08-10]

## Description

### TECHNICAL FIELD

The present disclosure relates to the field of wireless communications technologies, and in particular, to a data transmission method and a related device.

### BACKGROUND

In a vehicle to vehicle (V2V, Vechicleto Vechicle) communications system, as an information source, any vehicle may exchange data with a surrounding vehicle in a broadcast or unicast manner, and send V2V information in a broadcast manner, so that information can be effectively transferred, and network flexibility can be improved. The V2V information is periodically broadcast information, including vehicle status information such as a vehicle identifier (ID, Identify), location information, a speed, an acceleration, or a driving route.

The V2V communications system is similar to an existing device-to-device (D2D, Device to Device) communications system based on a Long Term Evolution (LTE, Long Term Evolution) network, and signals transmitted in the D2D system mainly include a D2D discovery signal and a D2D communication signal. The vehicle status information that is periodically broadcast in the V2V communications system may be transmitted by transmitting a discovery signal in the D2D communications system. However, in a D2D discovery signal transmission process, a D2D device randomly uses a time-frequency resource in a resource pool to send a discovery signal, and the D2D discovery signal is restricted by a half-duplex mode. For example, when sending a discovery signal in a subframe b, a device A cannot receive a discovery signal sent by another device in the subframe b by using another frequency, that is, the device A and the another device cannot discover each other. To resolve this problem, D2D discovery signals are usually sent in different subframes at least four consecutive times, so as to increase a probability that the device A discovers more devices.

However, a delay is relatively large in multiple consecutive times of sending D2D discovery signals, devices cannot discover each other quickly. In addition, each device randomly uses a time-frequency resource in a discovery resource pool to send a periodic signal, and therefore, multiple devices simultaneously select a same time-frequency resource, resulting in a conflict.

US 2013/010661 relates to methods and apparatus for OFDM peer discovery. WO 2015/064442 relates to user terminal, wireless base station, and wireless communication method. CATT: "Further discussion on resource allocation for D2D discovery", 3GPP DRAFT; R1-140098, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX;FRANCE vol. RAN WG1, no. Prague, Czech Republic; 20140210-20140214 9 February 2014 and ZTE: "Discussion of D2D Discovery", 3GPP DRAFT; R1-133149 D2D DISCOVERY, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE vol. RAN WG1, no. Barcelona, Spain; August 2013 relate to D2D discovery. US 8520695 relates to time-slot-based system and method of inter-vehicle communication.

### SUMMARY

The present disclosure provides a data transmission method and a related device, so as to resolve a problem that a delay in discovering each other by devices in D2D communication is relatively long.

Various aspects of the present disclosure have been defined in the independent claims. Further technical features of each of these aspects have been defined in the respective dependent claims.

It can be learned from the foregoing technical solutions that in the present disclosure, the first device determines the first transmission resource and the second transmission resource according to the transmission pattern, and sends the status information to the second device by separately using the first transmission resource and the second transmission resource. This ensures that the second device can receive the status information provided that the first device sends the status information twice, so that the first device can also receive status information sent by the second device, thereby effectively reducing a delay in discovering each other by the first device and the second device.

### BRIEF DESCRIPTION OF DRAWINGS

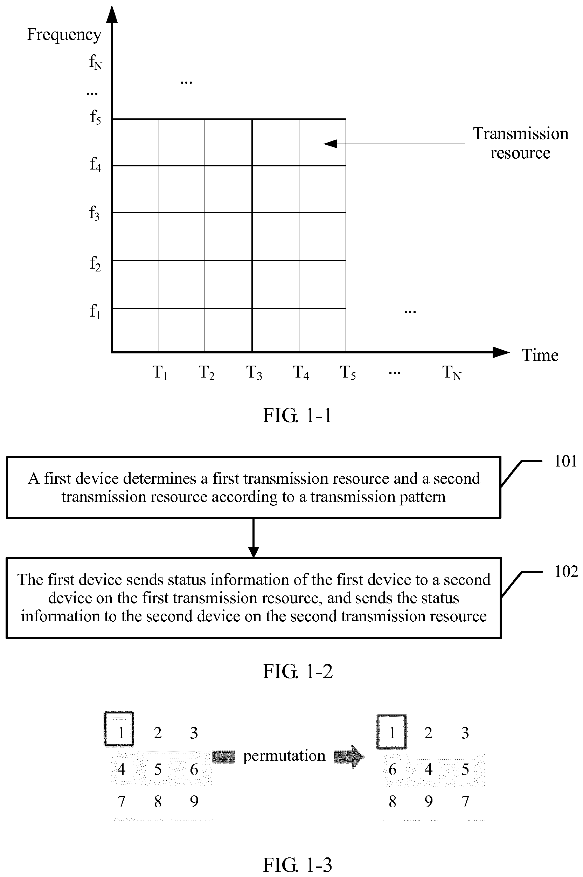

FIG. 1-1 is a schematic structural diagram of a transmission pattern according to an aspect of the present disclosure;
FIG. 1-2 is a schematic flowchart of a data transmission method according to an aspect of the present disclosure;
FIG. 1-3 is a flowchart of an aspect of the present disclosure;
FIG. 2 is another schematic flowchart of a data transmission method according to an aspect of the present disclosure;
FIG. 3-1 is a schematic change diagram of a location that is in a transmission pattern and that is corresponding to a resource during the first time of sending status information according to an aspect of the present disclosure;
FIG. 3-2 is a schematic change diagram of a location that is in a transmission pattern and that is corresponding to a resource during the second time of sending status information according to an aspect of the present disclosure;
FIG. 3-3 is a schematic change diagram of a location that is in a transmission pattern (N×N) and that is corresponding to a resource during two consecutive times of sending status information according to an aspect of the present disclosure;
FIG. 4 is a schematic structural diagram of a first terminal according to an aspect of the present disclosure;
FIG. 5 is another schematic structural diagram of a first terminal according to an aspect of the present disclosure;
FIG. 6 is another schematic structural diagram of a first terminal according to an aspect of the present disclosure; and
FIG. 7 is another schematic structural diagram of a first terminal according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are merely some but not all of the aspects of the present disclosure.

The invention is defined by the independent claims. Further embodiments of the claimed invention are described in the dependent claims. Any "aspect", "embodiment", or "example" described in the following and not falling within the scope of the claimed invention thus defined is to be interpreted as background information provided to facilitate the understanding of the claimed invention.

In the specification, claims, and accompanying drawings of the present disclosure, the terms "first", "second", and so on are intended to distinguish between similar objects but do not necessarily indicate a specific order or sequence. It should be understood that the data termed in such a way are interchangeable in proper circumstances so that the aspects of the present disclosure described herein can be implemented in other orders than the order illustrated or described herein. In addition, the terms "include", "have", or any other variant thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this specification is merely logical division, and there may be another division during implementation in actual application. For example, multiple modules may be combined or integrated into another system, or some features may be ignored or not performed. In addition, the displayed or discussed mutual couplings or direct couplings or communication connections may be implemented by using some interfaces. The indirect couplings or communication connections between the modules may be implemented in electronic or another form, and this is not limited in this specification. In addition, modules or submodules described as separate components may be or may not be physically separated, or may be or may not be physical modules, or may not be grouped into multiple circuit modules. Objectives of the solutions in the aspects of the present disclosure can be achieved by selecting some or all of the modules according to actual requirements.

The aspects of the present disclosure are applied to the field of wireless communications technologies and provide a data transmission method and a related device, so as to resolve a problem that a delay in discovering each other by devices in D2D communication is relatively long. To some extent, a prior-art conflict can be effectively avoided in which multiple devices may simultaneously select a same time-frequency resource because a device randomly uses a time-frequency resource in a resource pool to send a periodic signal. A device in this specification may be understood as any intra-area moving device, such as a vehicle running in a lane, a flight device flying in the air, or a ship travelling on a waterway, or may be a high-speed moving device such as a satellite moving in an orbit. A specific application scenario is not limited in this specification.

A transmission pattern in this specification instructs an intra-area device to select a transmission resource from a preconfigured resource pool to communicate with another intra-area or extra-area device, and each unit in the transmission pattern is corresponding to one transmission resource in the resource pool. As shown in FIG. 1-1, the transmission pattern includes a time axis and a frequency axis, a minimum unit formed by a division value of the time axis and a division value of the frequency axis in the transmission pattern is corresponding to one transmission resource, the time axis includes N time points (T₁, T₂, ..., T_{N}), the frequency axis includes N frequency points (f₁, f₂, ..., f_{N}), and each group of coordinates (Tₓ, f_{y}) in the transmission pattern is corresponding to one transmission resource. A minimum unit of the transmission resource is one physical resource block (PRB, Physical Resource Block), the transmission resource occupies 12 consecutive subcarriers in frequency domain and one timeslot in time domain, and a length of the timeslot is 0.5 ms. The transmission resource may include multiple PRBs, for example, two PRBs, the transmission resource occupies 12 consecutive subcarriers in frequency domain and one sub frame in time domain, and a length of the sub frame is 1 ms.

In addition, when a device periodically sends status information of the device (the status information may include identifier information (such as a vehicle ID), location information, a moving speed, an acceleration, a moving direction, a possible driving route, and the like, or may be referred to as a periodic signal), the device needs to select, according to a transmission pattern configured by a third-party device (a network access device such as a roadside infrastructure or a base station), a transmission resource for periodically sending the status information of the device. The device may select the transmission resource according to a rule of the transmission pattern, or select the transmission resource according to control signaling sent by the third-party device and a rule of the transmission pattern. This is not specifically limited.

For example, the transmission pattern may have the following rule:
The transmission pattern specifies a rule of selecting a transmission resource during two consecutive times of sending the status information of the device. For example, during one time of sending the status information of the device, the device selects a transmission resource indicated by a first unit in the transmission pattern, so as to send the status information of the device, and during a next time of sending the status information of the device, the device needs to select, according to the rule of the transmission pattern, a transmission resource indicated by a second unit that is corresponding to the first unit in the transmission pattern, so as to send the status information of the device. A specific rule may be specified according to an actual case (such as road status information in a particular time period, a service volume in a particular time period, a quantity of intra-area devices in a particular time period, or an actual capacity of the resource pool in a particular time period), and this is not limited in this specification.

Referring to FIG. 1-2, a data transmission method is provided, and the method includes the following steps.

101. A first device determines a first transmission resource and a second transmission resource according to a transmission pattern.

The first transmission resource and the second transmission resource are corresponding to different locations in the transmission pattern in time domain.

102. The first device sends status information of the first device to a second device on the first transmission resource, and sends the status information to the second device on the second transmission resource.

During two consecutive times of sending the status information by the first device, a location that is in the transmission pattern and that is of a resource occupied by the first device and a location that is in the transmission pattern and that is of a resource occupied by the second device are orthogonal at least once in time domain.

That the location of the resource occupied by the first device and the location of the resource occupied by the second device are orthogonal at least once in time domain are specifically:
a first location and a second location are orthogonal in time domain during one of the two consecutive times of sending by the first device, and/or a third location and a fourth location are orthogonal in time domain during the other one of the two consecutive times of sending; and the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending.

The first transmission resource and the second transmission resource are resources used by the first device during the two consecutive times of sending the status information.

In actual application, for the second device, the second location and the fourth location may be the same or different during the two consecutive times of sending. That is, when the second device sends status information of the second device, a transmission resource may keep unchanged (the transmission pattern in the present disclosure may not be used), or a transmission resource may change. The first device can communicate with more devices during a minimum quantity of times of sending provided that the first device sends the status information by using the transmission pattern in the present disclosure.

In this aspect of the present disclosure, the first device determines the first transmission resource and the second transmission resource according to the transmission pattern, and sends the status information to the second device by separately using the first transmission resource and the second transmission resource. This ensures that the second device can receive the status information provided that the first device sends the status information twice, so that the first device can also receive the status information sent by the second device, thereby effectively reducing a delay in discovering each other by the first device and the second device.

Optionally, based on the aspect corresponding to FIG. 1-2, in a first optional aspect of this aspect of the present disclosure, resources used by the first device during every two consecutive times of sending the status information are corresponding to different locations in the transmission pattern in time domain, and a resource used by the first device and a resource used by the second device during at least one of the every two consecutive times of sending are corresponding to different locations in the transmission pattern in time domain.

It can be understood that, during any two consecutive times of sending, resourced used by the first device during the two consecutive times of sending are corresponding to different locations in the transmission pattern in time domain; or locations in the transmission pattern that are corresponding to a resource occupied by the first device and a resource occupied by the second device are orthogonal at least once in time domain.

In addition, a location that is in the transmission pattern and that is corresponding to a resource in time domain may be understood as a subframe (or a time-domain resource), subframes used by the first device during two consecutive times of sending are different, and it is only required to ensure that a subframe used by the second device and a subframe used by the first device are different during at least one of the two times of sending.

For example, the first device selects different subframes during two consecutive times of sending, that is, the first device uses a subframe A during the first time of sending and uses a subframe B during the second time of sending. If the second device uses the subframe A during the first time of sending by the first device, it indicates that during the first time of sending, the first device cannot receive the status information sent by the second device. Therefore, during the second time of sending by the first device, provided that the first device does not use a same subframe as the second device, that is, the second device may select a subframe different from the subframe B or continue to select the subframe A, the first device and the second device can receive the status information of each other during the two times of sending, that is, the first device and the second device can discover each other. In addition, during the first time of sending by the first device, if the second device uses any subframe different from the subframe A, the second device can receive the status information of the first device.

In this optional aspect, to some extent, a prior-art conflict can be effectively avoided in which multiple devices may simultaneously select a same time-frequency resource because a device randomly uses a time-frequency resource in a resource pool to send a periodic signal.

For a specific example, refer to FIG. 1-3. Numerals in FIG. 1-3 represent locations in the transmission pattern that are corresponding to transmission resources occupied by different devices. For example, during one time of sending periodic signals by devices 1, 4, and 7, the devices 1, 4, and 7 occupy a same subframe, and only occupied frequencies are different. In this case, the devices 1, 4, and 7 cannot receive the periodic signals broadcast by each other, that is, the devices 1, 4, and 7 cannot discover each other. During a next time of sending periodic signals, the devices 1, 4, and 7 select different subframes, so that the devices 1, 4, and 7 can receive the periodic signals broadcast by each other.

Devices that are in a same subframe during one time of sending may select, during a next time of sending, transmission resources that are corresponding to different locations in the transmission pattern in time domain. As shown in FIG. 1-3, devices 2, 5, and 8 occupy a same subframe during one time of sending, and devices 3, 6, and 9 occupy a same subframe during one time of sending. The devices 2, 5, and 8 or the devices 3, 6, and 9 may select, during a next time of sending, different locations in the transmission pattern in time domain according to a rule of the transmission pattern shown in FIG. 1-3, so that the devices can discover each other after the two times of sending. In this way, a quantity of times of sending periodic signals can be effectively reduced, and a delay in discovering each other by devices can be reduced.

Optionally, based on the aspect corresponding to FIG. 1 or the first optional aspect, in a second optional aspect of this aspect of the present disclosure, in the transmission pattern shown in FIG. 1-1, the transmission pattern includes a time axis and a frequency axis, a minimum unit formed by a division value of the time axis and a division value of the frequency axis in the transmission pattern is corresponding to one transmission resource, the time axis includes N time points (T₁, T₂, ..., T_{N}), the frequency axis includes N frequency points (f₁, f₂, ..., f_{N}), and each group of coordinates (Tₓ, f_{y}) in the transmission pattern is corresponding to one transmission resource.

The first transmission resource is corresponding to first coordinates (Tᵢ, fⱼ) in the transmission pattern, the second transmission resource is corresponding to second coordinates (T_{(i+m)mod N}, fⱼ) in the transmission pattern, N, i, j, m, x, and y are all positive integers, i, j, m, x, and y each are not greater than N, and i+m≤N. Optionally, the second transmission resource may be corresponding to a coordinates (T_{(i+p)mod N}, f_{(i+q)mod N}) in the transmission pattern, and p and q are zero or positive integers. That is, during the second time of sending by the first device, a frequency-domain resource may keep unchanged, or both a time-domain resource and a frequency-domain resource may change. This is not specifically limited in this specification.

It can be learned from this optional aspect that, the first device is any device in all areas that sends a periodic signal, that is, during two consecutive times of sending a first periodic signal, the first device selects the first transmission resource to send the first periodic signal in the first time of sending, and selects the second transmission resource to send the second periodic signal in the second time of sending, and this is applicable to all devices in all the areas that send periodic signals. The two consecutive times of sending the first periodic signal may be used as one hop, and it is only required to ensure that the second transmission resource and the first transmission resource are corresponding to different locations in the transmission pattern in time domain. A specific rule may be set according to an actual scenario, and is not limited to this optional aspect.

Optionally, based on the second optional aspect, in a third optional aspect of this aspect of the present disclosure, the status information includes a first periodic signal, and when the first device sends the first periodic signal on the first transmission resource, the second device sends a second periodic signal on a third transmission resource, and the third transmission resource is corresponding to at least one of third coordinates (Tᵢ, f_{(j+n)mod N}), fourth coordinates (T_{(i+k)mod N}, f_{(j+n)mod N}), or fifth coordinates (T_{(i+k)mod N}, fⱼ) in the transmission pattern; or
when the first device sends the first periodic signal on the second transmission resource, the second device sends the second periodic signal on a fourth transmission resource, and the fourth transmission resource is corresponding to one of the third coordinates (Tᵢ, f_{(j+n)mod N}), the sixth coordinates (T_{(i+k)mod N}, f_{(j+n)mod N}), or seventh coordinates (T_{(i+k)mod N}, fⱼ) in the transmission pattern, n and k are positive integers, and k≠m in the seventh coordinates.

It can be learned from this optional aspect that, when the first device sends the first periodic signal for the first time, the second device and the first device may be located on a same time-domain resource and different frequency-domain resources (referring to the third coordinates), and therefore, the first device and the second service cannot receive periodic signals sent by each other; or the second device and the first device may be located on different time-domain resources and different frequency-domain resources (referring to the fourth coordinates), or located on different time-domain resources and a same frequency-domain resource (referring to the fifth coordinates).

When the first device sends the first periodic signal for the second time, the second device and the first device may be located on different time-domain resources and different frequency-domain resources (referring to the third coordinates), and therefore, the first device and the second service can receive periodic signals sent by each other; or the second device and the first device may be located on a same time-domain resource and different frequency-domain resources (referring to the sixth coordinates, and k=m); or the second device and the first device may be located on different time-domain resources and different frequency-domain resources (referring to the sixth coordinates, and k≠m), or located on different time-domain resources and a same frequency-domain resource (referring to the seventh coordinates).

It can be understood that the first device and the second device are in a same area or different areas. When the first device and the second device select transmission resources during two consecutive times of sending periodic signals, time-domain resources and frequency-domain resources respectively used by the first device and the second device may change, and it is only required to ensure that the first device and the second device select different time-domain resources. A specific rule may be regular or irregular, or may be determined according to a particular device priority policy, or the like. This is not limited in this specification.

Optionally, based on the third optional aspect, in a fourth optional aspect of this aspect of the present disclosure, the second device includes a third device and a fourth device, and the method further includes:
when sending the first periodic signal on the first transmission resource, receiving, by the first device, a third periodic signal sent by the third device on a fifth transmission resource, where the fifth transmission resource and the first transmission resource are corresponding to different locations in the transmission pattern in time domain; and sending, by the fourth device, a fourth periodic signal on a sixth transmission resource, where the sixth transmission resource and the first transmission resource are corresponding to a same location in the transmission pattern in time domain; and
when sending the first periodic signal on the second transmission resource, receiving, by the first device, the fourth periodic signal sent by the fourth device on the seventh transmission resource, and receiving the second periodic signal sent by the third device on an eighth transmission resource, where the seventh transmission resource and the second transmission resource are corresponding to different locations in the transmission pattern in time domain, and the eighth transmission resource and the second transmission resource are corresponding to different locations in the transmission pattern in time domain; or
the method further includes:
   when sending the first periodic signal on the first transmission resource, receiving, by the first device, a third periodic signal sent by the third device on a fifth transmission resource, where the fifth transmission resource and the first transmission resource are corresponding to different locations in the transmission pattern in time domain; and sending, by the fourth device, a fourth periodic signal on a sixth transmission resource, where the sixth transmission resource and the first transmission resource are corresponding to a same location in the transmission pattern in time domain; and
   when sending the first periodic signal on the second transmission resource, receiving, by the first device, the fourth periodic signal sent by the fourth device on the seventh transmission resource, where the seventh transmission resource and the second transmission resource are corresponding to different locations in the transmission pattern in time domain; and sending, by the third device, the fourth periodic signal on the eighth transmission resource, where the eighth transmission resource and the second transmission resource are corresponding to a same location in the transmission pattern in time domain.

Optionally, based on the aspect corresponding to FIG. 1 and any one of the first to the fourth optional aspects, in a fifth optional aspect of this aspect of the present disclosure, when the first device sends the status information, the first device further performs the following step:
sending, by the first device, a device identifier set, where the device identifier set includes a device identifier of at least one fifth device, and the first device and the fifth device meet at least one of the following conditions:
a transmission resource occupied by the first device and a transmission resource occupied by the fifth device occupy a same frequency, and the transmission resource occupied by the first device and the transmission resource occupied by the fifth device are adjacent in time domain; or
when a transmission resource occupied by the fifth device is not in a dead zone of a transmission resource occupied by the first device, the fifth device and the first device are adjacent in physical location, and the dead zone indicates a set of resources that are corresponding to a same location in the transmission pattern in time domain as the resource occupied by the first device.

It can be understood that, a case in which the first device and the second device are dead zones of each other is as follows:
When the first transmission resource used by the first device is the same as the third transmission resource used by the second device in time domain, and the second transmission resource used by the first device is the same as the fourth transmission resource used by the second device in time domain, the first device and the second device are dead zones of each other.

Optionally, based on the aspect corresponding to FIG. 1 and any one of the first to the fifth optional aspects, in a sixth optional aspect of this aspect of the present disclosure, that a first device determines a first transmission resource and a second transmission resource according to a transmission pattern specifically includes:
the first device selects the first transmission resource and the second transmission resource from the transmission pattern according to a received control signal.

Optionally, based on the aspect corresponding to FIG. 1 and any one of the first to the sixth optional aspects, in a seventh optional aspect of this aspect of the present disclosure, the status information includes a periodic signal and a speed, and the method further includes:
determining, by the first device according to a correspondence between the speed of the first device and sending frequency of sending the periodic signal, the sending frequency corresponding to the speed, where the speed of the first device is in direct proportion to the sending frequency; and
that the first device sends status information of the first device to a second device on the first transmission resource, and sends the status information to the second device on the second transmission resource includes:
   according to the sending frequency, the first device sends the periodic signal on the first transmission resource, and sends the periodic signal on the second transmission resource.

For example, a higher speed of the first device indicates that higher corresponding sending frequency is required, so that another intra-area device can receive in time the status information sent by the first device. Correspondingly, the another device also selects sending frequency according to a speed of the another device, so that the first device can also receive in time status information sent by the another device. In this optional aspect, the sending frequency is selected by using the speed, thereby effectively reducing a delay in discovering each other by devices, and ensuring continuity and stability of communication between the devices.

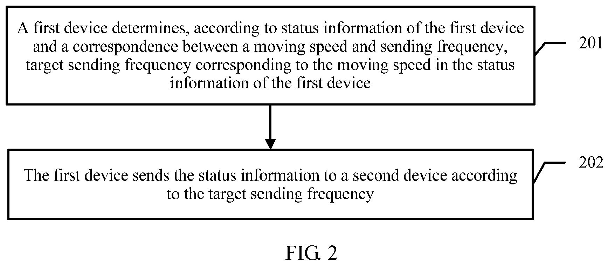

Referring to FIG. 2-1, a signal discovery rate can be improved from a perspective of sending frequency in an aspect of the present disclosure. The following describes a data transmission method by using an example, and the method includes the following steps.

201. A first device determines, according to status information of the first device and a correspondence between a speed of the first device and sending frequency of sending the status information, the sending frequency corresponding to the speed of the first device in the status information of the first device.

The speed of the first device is in direct proportion to the sending frequency. For example, a higher speed of the first device indicates that higher corresponding sending frequency is required, so that another intra-area device can receive in time the status information sent by the first device.

202. The first device sends the status information to a second device according to the sending frequency.

In actual application, an example in which a vehicle sends a periodic signal is used. Frequency at which a resource pool for sending a periodic signal appears in time domain depends on a vehicle speed, that is, sending frequency of the periodic signal depends on the vehicle speed, and a higher vehicle speed indicates higher sending frequency of the periodic signal. For example, several vehicle speed thresholds may be set to 30 km/h, 60 km/h, 120 km/h, and 240 km/h. If a speed of a vehicle exceeds the threshold, frequency at which the vehicle can use the resource pool of the periodic signal doubles, that is, more resource pools can be used to send the periodic signal. If frequency of sending a periodic signal by a vehicle whose vehicle speed is lower than 30 km/h may be set to f, frequency of sending a periodic signal by a vehicle whose vehicle speed is from 30 km/h to 60 km/h is 2f, and other cases are deduced by analogy. If a speed of a vehicle is higher, the vehicle needs to use more resources to send a periodic signal. This aspect is merely used as an example for ease of understanding, but is not limited to a manner of configuring a speed and sending frequency described in this aspect of the present disclosure.

In this aspect of the present disclosure, the correspondence between the speed of the first device and the sending frequency is configured in advance, so that the first device in motion can select the sending frequency according to the speed of the first device and send the status information according to the sending frequency, and can communicate with the intra-area second device in a shorter time period.

Optionally, based on the aspect corresponding to FIG. 2-1, in a first optional aspect of this aspect of the present disclosure, the status information further includes a periodic signal, and the method further includes:
determining, by the first device, a first transmission resource and a second transmission resource according to a transmission pattern, where the first transmission resource and the second transmission resource are corresponding to different locations in the transmission pattern in time domain; and
that the first device sends the status information of the first device to a second device according to the sending frequency includes:
   according to the sending frequency, the first device sends the periodic signal on the first transmission resource, and sends the periodic signal on the second transmission resource, where a first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information.

Optionally, based on the first optional aspect, in a second optional aspect of this aspect of the present disclosure, resources used by the first device during the two consecutive times of sending the status information are corresponding to different locations in the transmission pattern in time domain, and a resource used by the first device and a resource used by the second device during at least one of the two consecutive times of sending are corresponding to different locations in the transmission pattern in time domain.

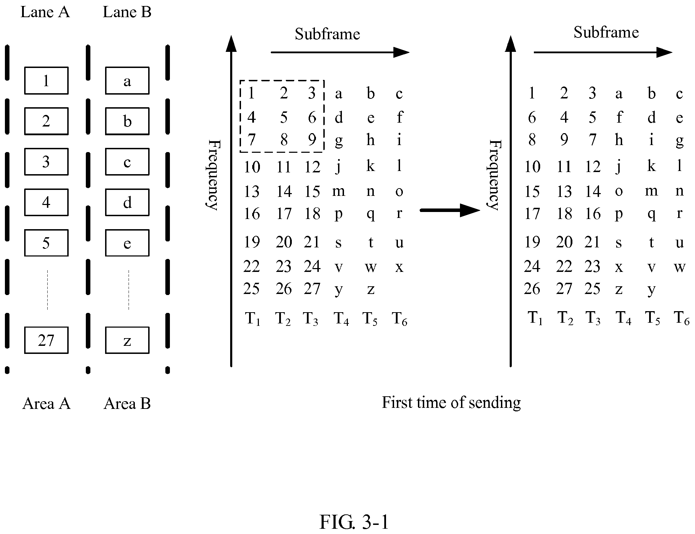

For ease of understanding, the following describes in detail the transmission pattern in this aspect of the present disclosure by using a specific application scenario. In an example in which a vehicle is running in a lane, one lane forms one area, and there are two lanes: a lane A (an area A) and a lane B (an area B). It is assumed that 27 vehicles are running in the lane A, and numerals 1, 2, ..., and 27 in FIG. 3-1 represent vehicle identifiers (ID, Identify). It is assumed that 26 vehicles are running in the lane B, and letters a, b, ..., and z in FIG. 3-1 represent vehicle IDs. A transmission resource occupied by a vehicle in the lane A and a transmission resource occupied by a vehicle in the lane B are corresponding to different locations in the transmission pattern in time domain, that is, the vehicle in the lane A and the vehicle in the lane B use different subframes to send periodic signals. In this case, the vehicle in the lane A and the vehicle in the lane B can receive the periodic signals sent by each other, that is, the vehicle in the lane A and the vehicle in the lane B can discover each other. However, during two consecutive times of sending periodic signals in the lane A or the lane B, some vehicles whose occupied transmission resources are corresponding to a same location in the transmission pattern in time domain cannot receive periodic signals sent by each other, that is, these vehicles are dead zone vehicles of each other.

The following describes how to minimize a quantity of dead zone vehicles corresponding to each vehicle in a particular range.

According to FIG. 3-1, the lane A is used as an example, and a case of the lane B is similar to this example. For example, during one time of sending a periodic signal by a vehicle in the lane A, transmission resources occupied by vehicles whose IDs are 1, 4, 7, 10, 13, 16, 19, 22, and 25 are corresponding to a same location T₁ in the transmission pattern in time domain, and therefore, these vehicles cannot receive periodic signals sent by each other, and a case of other vehicles are similar to this. During a next time of sending a periodic signal, a vehicle in the lane A selects a transmission resource according to a rule of the transmission pattern. It is ensured as far as possible that transmission resources occupied by vehicles in a current time of sending periodic signals are corresponding to different locations in the transmission pattern in time domain, where the vehicles are vehicles whose transmission resources occupied in a previous time of sending periodic signals are corresponding to a same location in the transmission pattern in time domain.

Specifically, for example, transmission resources selected by vehicles whose IDs are 1, 10, and 19 are corresponding to a same location T₁ in the transmission pattern in time domain, transmission resources selected by vehicles whose IDs are 4, 13, and 22 are corresponding to a same location T₂ in the transmission pattern in time domain, and transmission resources selected by vehicles whose IDs are 7, 16, and 25 are corresponding to a same location T₃ in the transmission pattern in time domain. Transmission resources occupied by each vehicle during any two consecutive times of sending a periodic signal are corresponding to a same frequency domain. The rule of the transmission pattern is merely used as an example for description herein, and there may be another rule of the transmission pattern. This is not specifically limited in this specification.

It can be learned that according to the transmission pattern in FIG. 3-1, the vehicles whose IDs are 1, 10, and 19 are dead zone vehicles of each other. That is, in a process of two consecutive times of sending a periodic signal, the vehicles whose IDs are 1, 10, and 19 cannot receive periodic signals sent by each other, and a case of other vehicles are similar to this.

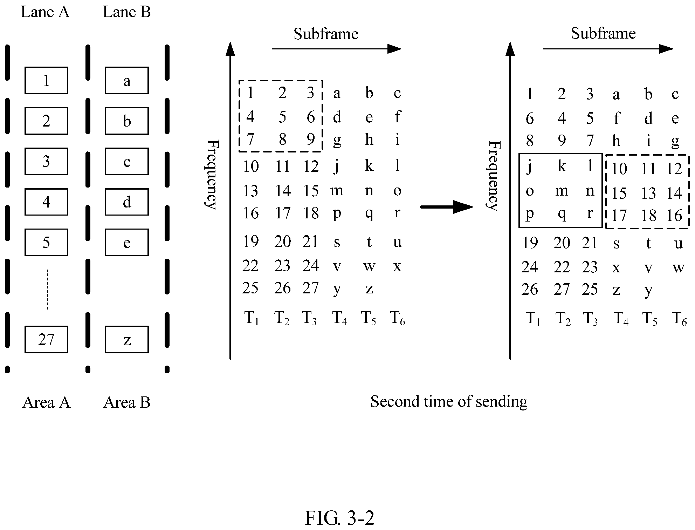

In addition, if the quantity of dead zone vehicles corresponding to each vehicle needs to be further reduced, a transmission resource may be selected according to a rule of a transmission pattern shown in FIG. 3-2. In comparison with the transmission pattern in FIG. 3-1, a transmission resource selection manner is added to the transmission pattern in FIG. 3-2, that is, the transmission pattern in FIG. 3-2 allows a vehicle is an area to select a transmission resource of another area.

For example, a transmission pattern of each area is divided into an N×N minimum resource group according to a quantity N of resource locations that are corresponding to the transmission pattern of each area in time domain. For example, in FIG. 3-2, if a transmission pattern of an area A is corresponding to three resource locations in time domain, a minimum resource group of the transmission pattern of each area is a matrix including 3×3 resource locations (as shown in a solid line block or a dashed line block in FIG. 3-2).

In the transmission pattern of each area, a vehicle that is corresponding to a transmission resource at an interval of a minimum resource group in a frequency direction during one time of sending a periodic signal selects a transmission resource of another area during a next time of sending a periodic signal. Specifically, as shown in FIG. 3-2, during one time of sending a periodic signal, a resource group (including vehicles whose IDs are 10, 11, 12, 13, 14, 15, 16, 17, and 18) in a dashed line block of the transmission pattern of the area A is interchanged with a resource group (including vehicles whose IDs are j, k, l, m, n, o, p, q, and r) in a solid line block of a transmission pattern of the area B.

During a next time of sending a periodic signal, a transmission resource of the area B is selected. In addition, vehicles whose IDs are j, k, l, m, n, o, p, q, and r select transmission resources of the area A, and the IDs are included in the resource group in the solid line block in the transmission pattern of the area B. In this case, when a vehicle in the resource group selects a transmission resource, the rule of the transmission pattern shown in FIG. 3-1 also needs to be met. It is ensured as far as possible that transmission resources occupied by vehicles in a current time of sending periodic signals are corresponding to different locations in the transmission pattern in time domain, where the vehicles are vehicles whose transmission resources occupied in a previous time of sending periodic signals are corresponding to a same location in the transmission pattern in time domain. According to the rule of the transmission pattern shown in FIG. 3-2, a quantity of dead zone vehicles can be further reduced. For example, vehicles that are dead zone vehicles of each other in FIG. 3-1 include vehicles whose IDs are 1, 10, and 19, vehicles that are dead zone vehicles of each other in FIG. 3-2 include vehicles whose IDs are 1 and 19, and so on. Therefore, vehicles in a particular range can discover each other, and traffic accidents caused due to a failure in discovering each other can be reduced to some extent.

Certainly, in FIG. 3-1 and FIG. 3-2, a case in which a same lane is used as one area to divide the transmission pattern is merely described, and another division method is not specifically limited in this specification. In addition, in FIG. 3-1 or FIG. 3-2, vehicles in a same area are arranged according to occupied subframes. In actual application, locations in the transmission pattern that are corresponding to subframes occupied by vehicles in different areas may overlap. This is not specifically limited.

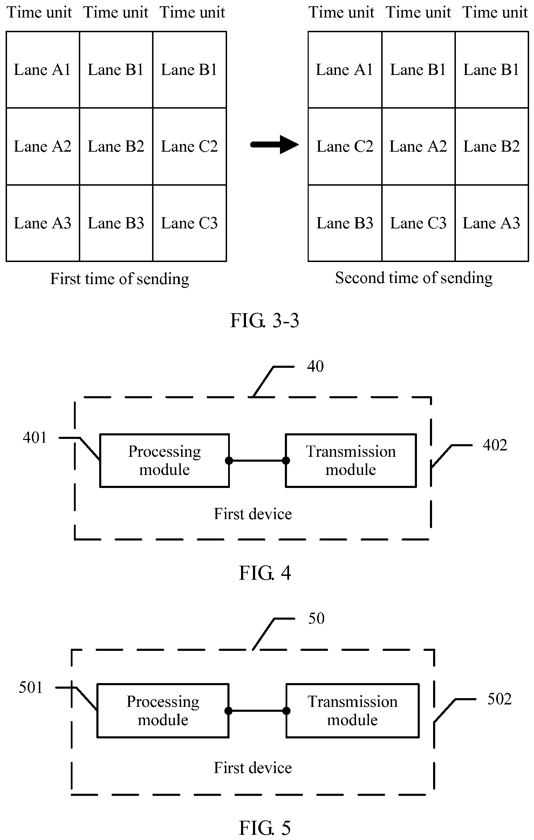

According to the description in the foregoing aspect, when a resource pool is sufficient, the transmission pattern in this solution may be extended to an N×N transmission pattern. As shown in FIG. 3-3, only an example of three areas formed by three lanes is given herein, and a multi-area case may be correspondingly extended. Details are not described in this specification.

The foregoing describes the data transmission method in the aspect of the present disclosure, and the following describes a first device in an aspect of the present disclosure by using an example. Referring to FIG. 4, the first device 40 includes:
a processing module 401, configured to determine a first transmission resource and a second transmission resource according to a transmission pattern, where the first transmission resource and the second transmission resource are corresponding to different locations in the transmission pattern in time domain; and
a transmission module 402, configured to: send status information of the first device to a second device on the first transmission resource determined by the processing module 401, and send the status information to the second device on the second transmission resource determined by the processing module 401, where the first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information.

In this aspect of the present disclosure, the processing module 401 determines the first transmission resource and the second transmission resource according to the transmission pattern, and the transmission module 402 sends the status information to the second device by separately using the first transmission resource and the second transmission resource. This ensures that the second device can receive the status information provided that the first device sends the status information twice, so that the first device can also receive status information sent by the second device, thereby effectively reducing a delay in discovering each other by the first device and the second device.

Optionally, based on the aspect corresponding to FIG. 4, in a first optional aspect of this aspect of the present disclosure, resources used by the transmission module 402 during every two consecutive times of sending the status information are corresponding to different locations in the transmission pattern in time domain, and a resource used by the transmission module 402 and a resource used by the second device during at least one of the every two consecutive times of sending are corresponding to different locations in the transmission pattern in time domain.

Optionally, based on the aspect corresponding to FIG. 4 or the first optional aspect, in a second optional aspect of this aspect of the present disclosure, the transmission pattern includes a time axis and a frequency axis, a minimum unit formed by a division value of the time axis and a division value of the frequency axis in the transmission pattern is corresponding to one transmission resource, the time axis includes N time points (T₁, T₂, ..., T_{N}), the frequency axis includes N frequency points (f₁, f₂, ..., f_{N}), and each group of coordinates (Tₓ, f_{y}) in the transmission pattern is corresponding to one transmission resource; and
the first transmission resource is corresponding to first coordinates (Tᵢ, fⱼ) in the transmission pattern, the second transmission resource is corresponding to second coordinates (T_{(i+m)mod N}, fⱼ) in the transmission pattern, N, i, j, m, x, and y are all positive integers, i, j, m, x, and y each are not greater than N, and i+m≤N.

Optionally, based on the second optional aspect, in a third optional aspect of this aspect of the present disclosure, the status information includes a first periodic signal, and when the transmission module 402 sends the first periodic signal on the first transmission resource, the second device sends a second periodic signal on a third transmission resource, and the third transmission resource is corresponding to at least one of third coordinates (Tᵢ, f_{(j+n)mod N}), fourth coordinates (T_{(i+k)mod N}, f_{(j+n)mod N}), or fifth coordinates (T_{(i+k)mod N}, fⱼ) in the transmission pattern; or
when the transmission module 402 sends the first periodic signal on the second transmission resource, the second device sends the second periodic signal on a fourth transmission resource, and the fourth transmission resource is corresponding to one of the third coordinates (Tᵢ, f_{(j+n)mod N}), the sixth coordinates (T_{(i+k)mod N}, f_{(j+n)mod N}), or seventh coordinates (T_{(i+k)mod N}, fⱼ) in the transmission pattern, n and k are positive integers, and k≠m in the seventh coordinates.

Optionally, based on the third optional aspect, in a fourth optional aspect of this aspect of the present disclosure, the second device includes a third device and a fourth device, and the transmission module 402 is further configured to:
when sending the first periodic signal on the first transmission resource, receive a third periodic signal sent by the third device on a fifth transmission resource, where the fifth transmission resource and the first transmission resource are corresponding to different locations in the transmission pattern in time domain; and the fourth device sends a fourth periodic signal on a sixth transmission resource, where the sixth transmission resource and the first transmission resource are corresponding to a same location in the transmission pattern in time domain; and
when sending the first periodic signal on the second transmission resource, receive the fourth periodic signal sent by the fourth device on a seventh transmission resource, and receive the third periodic signal sent by the third device on an eighth transmission resource, where the seventh transmission resource and the second transmission resource are corresponding to different locations in the transmission pattern in time domain, and the eighth transmission resource and the second transmission resource are corresponding to different locations in the transmission pattern in time domain; or
the transmission module 402 is further configured to:
   when sending the first periodic signal on the first transmission resource, receive a third periodic signal sent by the third device on a fifth transmission resource, where the fifth transmission resource and the first transmission resource are corresponding to different locations in the transmission pattern in time domain; and the fourth device sends a fourth periodic signal on a sixth transmission resource, where the sixth transmission resource and the first transmission resource are corresponding to a same location in the transmission pattern in time domain; and
   when sending the first periodic signal on the second transmission resource, receive the fourth periodic signal sent by the fourth device on the seventh transmission resource, where the seventh transmission resource and the second transmission resource are corresponding to different locations in the transmission pattern in time domain; and the third device sends the fourth periodic signal on the eighth transmission resource, where the eighth transmission resource and the second transmission resource are corresponding to a same location in the transmission pattern in time domain.

Optionally, based on the aspect corresponding to FIG. 4 or any one of the first to the fourth optional aspects, in a fifth optional aspect of this aspect of the present disclosure, when the transmission module 402 sends the status information, the transmission module 402 further performs the following step:
sending a device identifier set, where the device identifier set includes a device identifier of at least one fifth device, and the first device and the fifth device meet at least one of the following conditions:
a transmission resource occupied by the first device and a transmission resource occupied by the fifth device occupy a same frequency, and the transmission resource occupied by the first device and the transmission resource occupied by the fifth device are adjacent in time domain; or
when a transmission resource occupied by the fifth device is not in a dead zone of a transmission resource occupied by the first device, the fifth device and the first device are adjacent in physical location, and the dead zone indicates a set of resources that are corresponding to a same location in the transmission pattern in time domain as the resource occupied by the first device.

Optionally, based on the aspect corresponding to FIG. 4 or any one of the first to the fifth optional aspects, in a sixth optional aspect of this aspect of the present disclosure, the processing module 401 is specifically configured to:
select the first transmission resource and the second transmission resource from the transmission pattern according to a control signal received by the transmission module 402.

Optionally, based on the aspect corresponding to FIG. 4 or any one of the first to the sixth optional aspects, in a seventh optional aspect of this aspect of the present disclosure, the status information includes a speed of the first device, and the processing module 401 is further configured to:
determine, according to a correspondence between the speed of the first device and sending frequency of sending the periodic signal, the sending frequency corresponding to the speed of the first device, where the speed of the first device is in direct proportion to the sending frequency; and
the transmission module 402 is specifically configured to:
   according to the sending frequency determined by the processing module 401, send the status information on the first transmission resource, and send the status information on the second transmission resource.

The foregoing describes the first device 40 from improvement of the transmission pattern, and the following describes a first device from improvement of the sending frequency. Referring to FIG. 5, the first device 50 includes:
a processing module 501, configured to determine, according to status information of the first device and a correspondence between a speed of the first device and sending frequency of sending the status information, the sending frequency corresponding to the speed of the first device in the status information of the first device, where the speed of the first device is in direct proportion to the sending frequency; and
a transmission module 502, configured to send the status information to a second device according to the sending frequency determined by the processing module 501.

In this aspect of the present disclosure, the correspondence between the speed of the first device and the sending frequency is configured in advance, so that the processing module 501 can select the sending frequency according to the speed of the first device when the first device is in motion, and the transmission module 502 sends the status information according to the sending frequency. The first device can communicate with the intra-area second device in a shorter time period.

Optionally, based on the aspect corresponding to FIG. 5, in a first optional aspect of this aspect of the present disclosure, the status information further includes a periodic signal, and the processing module 501 is further configured to:
determine a first transmission resource and a second transmission resource according to a transmission pattern, where the first transmission resource and the second transmission resource are corresponding to different locations in the transmission pattern in time domain; and
the transmission module 502 is specifically configured to:
   according to the sending frequency, send the periodic signal on the first transmission resource, and send the periodic signal on the second transmission resource, where a first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information.

Optionally, based on the first optional aspect, in a second optional aspect of this aspect of the present disclosure, resources used by the transmission module 502 during every two consecutive times of sending the status information are corresponding to different locations in the transmission pattern in time domain, and a resource used by the transmission module 502 and a resource used by the second device during at least one of the every two consecutive times of sending are corresponding to different locations in the transmission pattern in time domain.

The present disclosure further provides a computer storage medium. The medium stores a program, and when the program is being executed, some or all steps in the data transmission method are performed.

The present disclosure further provides a computer storage medium. The medium stores a program, and when the program is being executed, the first device performs some or all steps in the data transmission method.

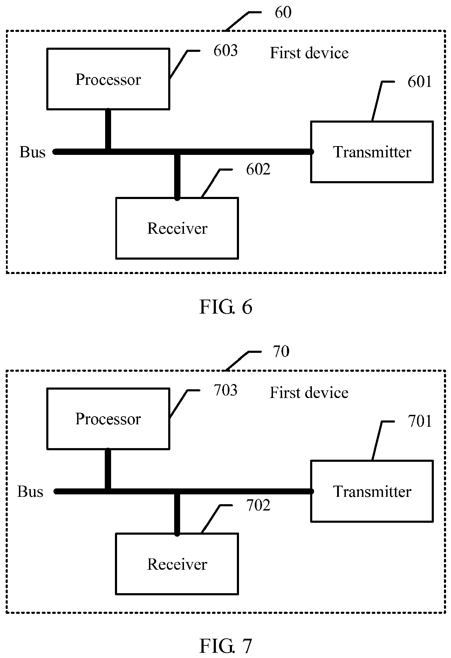

FIG. 6 is another schematic structural diagram of a first device 60 according to an aspect of the present disclosure. The first device 60 may include at least one network interface or another communications interface, at least one receiver 601, at least one transmitter 602, at least one processor 603, and a memory 604, so as to implement connection and communication between these apparatuses. The at least one network interface (which may be wired or wireless) may be used to implement connection and communication between the system gateway and at least one other network element by using the Internet, a wide area network, a local area network, a metropolitan area network, or the like.

The memory 604 may include a read-only memory and a random access memory, and provide an instruction and data for the processor 603. A part of the memory 604 may further include a high-speed random access memory (RAM, Random Access Memory), and may further include a non-volatile memory (non-volatile memory).

The memory 604 stores the following elements: an executable module or a data structure, a subset of an executable module or a data structure, or an extended set of an executable module or a data structure:
operation instructions, including various operation instructions, used to implement various operations; and
an operating system, including various system programs, used to implement various basic services and process hardware-based tasks.

In this aspect of the present disclosure, the processor 603 executes the following operations by invoking an operation instruction stored in the memory 604 (the operation instruction may be stored in the operating system):
determining a first transmission resource and a second transmission resource according to a transmission pattern, where the first transmission resource and the second transmission resource are corresponding to different locations in the transmission pattern in time domain; and
by using the transmitter 602, sending status information of the first device to a second device on the first transmission resource, and sending the status information to the second device on the second transmission resource, where the first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information.

Optionally, resources used by the transmitter 602 during every two consecutive times of sending the status information are corresponding to different locations in the transmission pattern in time domain, and a resource used by the transmitter 602 and a resource used by the second device during at least one of the every two consecutive times of sending are corresponding to different locations in the transmission pattern in time domain.

Optionally, the transmission pattern includes a time axis and a frequency axis, a minimum unit formed by a division value of the time axis and a division value of the frequency axis in the transmission pattern is corresponding to one transmission resource, the time axis includes N time points (T₁, T₂, ..., T_{N}), the frequency axis includes N frequency points (f₁, f₂, ..., f_{N}), and each group of coordinates (Tₓ, f_{y}) in the transmission pattern is corresponding to one transmission resource; and
the first transmission resource is corresponding to first coordinates (Tᵢ, fⱼ) in the transmission pattern, the second transmission resource is corresponding to second coordinates (T_{(i+m)mod N}, fⱼ) in the transmission pattern, N, i, j, m, x, and y are all positive integers, i, j, m, x, and y each are not greater than N, and i+m≤N.

Optionally, the status information includes a first periodic signal, and when the transmission module sends the first periodic signal on the first transmission resource, the second device sends a second periodic signal on a third transmission resource, and the third transmission resource is corresponding to at least one of third coordinates (Tᵢ, f_{(j+n)mod N}), fourth coordinates (T_{(i+k)mod N}, f_{(j+n)mod N}), or fifth coordinates (T_{(i+k)mod N}, fⱼ) in the transmission pattern; or
when the transmission module sends the first periodic signal on the second transmission resource, the second device sends the second periodic signal on a fourth transmission resource, and the fourth transmission resource is corresponding to one of the third coordinates (Tᵢ, f_{(j+n)mod N}), the sixth coordinates (T_{(i+k)mod N}, f_{(j+n)mod N}), or seventh coordinates (T_{(i+k)mod N}, fⱼ) in the transmission pattern, n and k are positive integers, and k≠m in the seventh coordinates.

In some implementations, the processor 603 may further perform the following steps:
when sending the first periodic signal on the first transmission resource by using the transmitter 602, receiving, by using the receiver 601, a third periodic signal sent by the third device on a fifth transmission resource, where the fifth transmission resource and the first transmission resource are corresponding to different locations in the transmission pattern in time domain; and the fourth device sends a fourth periodic signal on a sixth transmission resource, where the sixth transmission resource and the first transmission resource are corresponding to a same location in the transmission pattern in time domain; and
when sending the first periodic signal on the second transmission resource by using the transmitter 602, by using the receiver 601, receiving the fourth periodic signal sent by the fourth device on a seventh transmission resource, and receiving the third periodic signal sent by the third device on an eighth transmission resource, where the seventh transmission resource and the second transmission resource are corresponding to different locations in the transmission pattern in time domain, and the eighth transmission resource and the second transmission resource are corresponding to different locations in the transmission pattern in time domain; or
the processor 603 may further perform the following steps:
   when sending the first periodic signal on the first transmission resource by using the transmitter 602, receiving, by using the receiver 601, a third periodic signal sent by the third device on a fifth transmission resource, where the fifth transmission resource and the first transmission resource are corresponding to different locations in the transmission pattern in time domain; and the fourth device sends a fourth periodic signal on a sixth transmission resource, where the sixth transmission resource and the first transmission resource are corresponding to a same location in the transmission pattern in time domain; and
   when sending the first periodic signal on the second transmission resource by using the transmitter 602, receiving, by using the receiver 601, the fourth periodic signal sent by the fourth device on the seventh transmission resource, where the seventh transmission resource and the second transmission resource are corresponding to different locations in the transmission pattern in time domain; and the third device sends the fourth periodic signal on the eighth transmission resource, where the eighth transmission resource and the second transmission resource are corresponding to a same location in the transmission pattern in time domain.

In some implementations, when sending the status information by using the transmitter 602, the processor 603 may further perform the following step:
sending a device identifier set by using the transmitter 602, where the device identifier set includes a device identifier of at least one fifth device, and the first device and the fifth device meet at least one of the following conditions:
a transmission resource occupied by the first device and a transmission resource occupied by the fifth device occupy a same frequency, and the transmission resource occupied by the first device and the transmission resource occupied by the fifth device are adjacent in time domain; or
when a transmission resource occupied by the fifth device is not in a dead zone of a transmission resource occupied by the first device, the fifth device and the first device are adjacent in physical location, and the dead zone indicates a set of resources that are corresponding to a same location in the transmission pattern in time domain as the resource occupied by the first device.

In some implementations, the processor 603 may further perform the following step:
selecting the first transmission resource and the second transmission resource from the transmission pattern according to a control signal received by the transmission module.

In some implementations, when the status information includes a speed of the first device, the processor 603 may further perform the following steps:
determining, according to a correspondence between the speed of the first device and sending frequency of sending the periodic signal, the sending frequency corresponding to the speed of the first device, where the speed of the first device is in direct proportion to the sending frequency; and
by using the transmitter 602 according to the sending frequency, sending the status information on the first transmission resource, and sending the status information on the second transmission resource.

FIG. 7 is another schematic structural diagram of a first device 70 according to an aspect of the present disclosure. The first device 70 may include at least one network interface or another communications interface, at least one receiver 701, at least one transmitter 702, at least one processor 703, and a memory 704, so as to implement connection and communication between these apparatuses. The at least one network interface (which may be wired or wireless) may be used to implement connection and communication between the system gateway and at least one other network element by using the Internet, a wide area network, a local area network, a metropolitan area network, or the like.

The memory 704 may include a read-only memory and a random access memory, and provide an instruction and data for the processor 703. A part of the memory 704 may further include a high-speed random access memory (RAM, Random Access Memory), and may further include a non-volatile memory (non-volatile memory).

The memory 704 stores the following elements: an executable module or a data structure, a subset of an executable module or a data structure, or an extended set of an executable module or a data structure:
operation instructions, including various operation instructions, used to implement various operations; and
an operating system, including various system programs, used to implement various basic services and process hardware-based tasks.

In this aspect of the present disclosure, the processor 703 executes the following operations by invoking an operation instruction stored in the memory 704 (the operation instruction may be stored in the operating system):
determining, according to status information of the first device and a correspondence between a speed of the first device and sending frequency of sending the status information, the sending frequency corresponding to the speed of the first device in the status information of the first device, where the speed of the first device is in direct proportion to the sending frequency; and
sending the status information to a second device by using the transmitter 702 according to the sending frequency.

In some implementations, when the status information further includes a periodic signal, the processor 703 may further perform the following steps:
determining a first transmission resource and a second transmission resource according to a transmission pattern, where the first transmission resource and the second transmission resource are corresponding to different locations in the transmission pattern in time domain; and
by using the transmitter 702 according to the sending frequency, sending the periodic signal on the first transmission resource, and sending the periodic signal on the second transmission resource, where a first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information.

Optionally, resources used by the transmitter 702 during every two consecutive times of sending the status information are corresponding to different locations in the transmission pattern in time domain, and a resource used by the transmitter 702 and a resource used by the second device during at least one of the every two consecutive times of sending are corresponding to different locations in the transmission pattern in time domain.

In the foregoing aspects, the description of each aspect has respective focuses. For a part that is not described in detail in an aspect, refer to related descriptions in other aspects.

It can be clearly understood by a person skilled in the art that, for the purpose of convenient and brief description, for a detailed working process of the foregoing system, apparatus, and unit, refer to a corresponding process in the foregoing method aspects. Details are not described herein again.

In the several aspects provided in this application, it should be understood that the disclosed system, apparatus, and method may be implemented in other manners. For example, the described apparatus aspect is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual requirements to achieve the objectives of the solutions of the aspects.

In addition, functional units in the aspects of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the aspects of the present disclosure. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc. The data transmission method and the related device provided in the present disclosure are described in detail above. The principle and implementation of the present disclosure are described in this specification through specific examples. The description about the aspects of the present disclosure is merely provided to help understand the method and core ideas of the aspects of the present disclosure. In addition, a person skilled in the art can make variations and modifications to the present disclosure in terms of the specific implementations and application scopes according to the ideas of the present disclosure. Therefore, the content of specification shall not be construed as a limit to the present disclosure.

## Claims

1. A data transmission method, wherein the method comprises:
determining (101), by a first device, a first transmission resource and a second transmission resource according to a transmission pattern, wherein the first transmission resource and the second transmission resource are corresponding to different locations in the transmission pattern in time domain; and
sending (102), by the first device, status information of the first device to a second device on the first transmission resource, and sending the status information to the second device on the second transmission resource, wherein a first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information;
**characterized in that** the transmission pattern comprises a time axis and a frequency axis, a minimum unit formed by a division value of the time axis and a division value of the frequency axis in the transmission pattern is corresponding to one transmission resource, the time axis comprises N time points (T₁, T₂, ..., T_{N}), the frequency axis comprises N frequency points (f₁, f₂, ..., f_{N}), and each group of coordinates (Tₓ, f_{y}) in the transmission pattern is corresponding to one transmission resource; and
the first transmission resource is corresponding to first coordinates (Tᵢ, fⱼ) in the transmission pattern, the second transmission resource is corresponding to second coordinates (T_{(i+m)mod N}, fⱼ) in the transmission pattern, N, i, j, m, x, and y are all positive integers, i, j, m, x, and y each are not greater than N, and i+m≤N.

2. The method according to claim 1, wherein resources used by the first device during every two consecutive times of sending the status information are corresponding to different locations in the transmission pattern in time domain, and a resource used by the first device and a resource used by the second device during at least one of the every two consecutive times of sending are corresponding to different locations in the transmission pattern in time domain.

3. The method according to claim 1 or 2, wherein the status information comprises a first periodic signal, and when the first device sends the first periodic signal on the first transmission resource, the second device sends a second periodic signal on a third transmission resource, and the third transmission resource is corresponding to at least one of third coordinates (Tᵢ, f_{(j+n)mod N}), fourth coordinates (T_{(i+k)mod N}, f_{(j+n)mod N}), or fifth coordinates (T_{(i+k)mod N}, fⱼ) in the transmission pattern; or
when the first device sends the first periodic signal on the second transmission resource, the second device sends the second periodic signal on a fourth transmission resource, and the fourth transmission resource is corresponding to one of the third coordinates (Tᵢ, f_{(j+n)mod N}), the sixth coordinates (T_{(i+k)mod N}, f_{(j+n)mod N}), or seventh coordinates (T_{(i+k)mod N}, fⱼ) in the transmission pattern, n and k are positive integers, and k≠m in the seventh coordinates.

4. The method according to claim 3, wherein the second device comprises a third device and a fourth device, and the method further comprises:
when sending the first periodic signal on the first transmission resource, receiving, by the first device, a third periodic signal sent by the third device on a fifth transmission resource, wherein the fifth transmission resource and the first transmission resource are corresponding to different locations in the transmission pattern in time domain; and sending, by the fourth device, a fourth periodic signal on a sixth transmission resource, wherein the sixth transmission resource and the first transmission resource are corresponding to a same location in the transmission pattern in time domain; and
when sending the first periodic signal on the second transmission resource, receiving, by the first device, the fourth periodic signal sent by the fourth device on a seventh transmission resource, and receiving the third periodic signal sent by the third device on an eighth transmission resource, wherein the seventh transmission resource and the second transmission resource are corresponding to different locations in the transmission pattern in time domain, and the eighth transmission resource and the second transmission resource are corresponding to different locations in the transmission pattern in time domain; or
the method further comprises:
when sending the first periodic signal on the first transmission resource, receiving, by the first device, a third periodic signal sent by the third device on a fifth transmission resource, wherein the fifth transmission resource and the first transmission resource are corresponding to different locations in the transmission pattern in time domain; and sending, by the fourth device, a fourth periodic signal on a sixth transmission resource, wherein the sixth transmission resource and the first transmission resource are corresponding to a same location in the transmission pattern in time domain; and
when sending the first periodic signal on the second transmission resource, receiving, by the first device, the fourth periodic signal sent by the fourth device on the seventh transmission resource, wherein the seventh transmission resource and the second transmission resource are corresponding to different locations in the transmission pattern in time domain; and sending, by the third device, the fourth periodic signal on the eighth transmission resource, wherein the eighth transmission resource and the second transmission resource are corresponding to a same location in the transmission pattern in time domain.

5. The method according to any one of claims 1 to 4, wherein when the first device sends the status information, the first device further performs the following step:
sending, by the first device, a device identifier set, wherein the device identifier set comprises a device identifier of at least one fifth device, and the first device and the fifth device meet at least one of the following conditions:
a transmission resource occupied by the first device and a transmission resource occupied by the fifth device occupy a same frequency, and the transmission resource occupied by the first device and the transmission resource occupied by the fifth device are adjacent in time domain; or
when a transmission resource occupied by the fifth device is not in a dead zone of a transmission resource occupied by the first device, the fifth device and the first device are adjacent in physical location, and the dead zone indicates a set of resources that are corresponding to a same location in the transmission pattern in time domain as the resource occupied by the first device.

6. The method according to any one of claims 1 to 5, wherein the determining, by a first device, a first transmission resource and a second transmission resource according to a transmission pattern specifically comprises:
selecting, by the first device, the first transmission resource and the second transmission resource from the transmission pattern according to a received control signal.

7. A first device, wherein the first device comprises:
a processing module (401), configured to determine a first transmission resource and a second transmission resource according to a transmission pattern, wherein the first transmission resource and the second transmission resource are corresponding to different locations in the transmission pattern in time domain; and
a transmission module (402), configured to: send status information of the first device to a second device on the first transmission resource determined by the processing module, and send the status information to the second device on the second transmission resource determined by the processing module, wherein the first location and a second location are orthogonal in time domain during one of two consecutive times of sending by the first device, and/or a third location and a fourth location are orthogonal in time domain during the other one of the two consecutive times of sending; the first location is a location that is in the transmission pattern and that is corresponding to the first transmission resource, the second location is a location that is in the transmission pattern and that is corresponding to a resource occupied by the second device during the one time of sending, the third location is a location that is in the transmission pattern and that is corresponding to the second transmission resource, and the fourth location is a location that is in the transmission pattern and that is corresponding to a resource occupied by the second device during the other time of sending; and the first transmission resource and the second transmission resource are resources used by the first device during the two consecutive times of sending the status information;
**characterized in that** the transmission pattern comprises a time axis and a frequency axis, a minimum unit formed by a division value of the time axis and a division value of the frequency axis in the transmission pattern is corresponding to one transmission resource, the time axis comprises N time points (T₁, T₂, ..., T_{N}), the frequency axis comprises N frequency points (f₁, f₂, ..., f_{N}), and each group of coordinates (Tₓ, f_{y}) in the transmission pattern is corresponding to one transmission resource; and
the first transmission resource is corresponding to first coordinates (Tᵢ, fⱼ) in the transmission pattern, the second transmission resource is corresponding to second coordinates (T_{(i+m)mod N}, fⱼ) in the transmission pattern, N, i, j, m, x, and y are all positive integers, i, j, m, x, and y each are not greater than N, and i+m≤N.

8. The first device according to claim 7, wherein resources used by the transmission module during every two consecutive times of sending the status information are corresponding to different locations in the transmission pattern in time domain, and a resource used by the transmission module and a resource used by the second device during at least one of the every two consecutive times of sending are corresponding to different locations in the transmission pattern in time domain.

9. The first device according to claim 7 or 8, wherein the status information comprises a first periodic signal, and when the transmission module sends the first periodic signal on the first transmission resource, the second device sends a second periodic signal on a third transmission resource, and the third transmission resource is corresponding to at least one of third coordinates (Tᵢ, f_{(j+n)mod N}), fourth coordinates (T_{(i+k)mod N}, f_{(j+n)mod N}), or fifth coordinates (T_{(i+k)mod N}, fⱼ) in the transmission pattern; or
when the transmission module sends the first periodic signal on the second transmission resource, the second device sends the second periodic signal on a fourth transmission resource, and the fourth transmission resource is corresponding to one of the third coordinates (Tᵢ, f_{(j+n)mod N}), the sixth coordinates (T_{(i+k)mod N}, f_{(j+n)mod N}), or seventh coordinates (T_{(i+k)mod N}, fⱼ) in the transmission pattern, n and k are positive integers, and k≠m in the seventh coordinates.

10. The first device according to claim 9, wherein the second device comprises a third device and a fourth device, and the transmission module is further configured to:
when sending the first periodic signal on the first transmission resource, receive a third periodic signal sent by the third device on a fifth transmission resource, wherein the fifth transmission resource and the first transmission resource are corresponding to different locations in the transmission pattern in time domain; and the fourth device sends a fourth periodic signal on a sixth transmission resource, wherein the sixth transmission resource and the first transmission resource are corresponding to a same location in the transmission pattern in time domain; and
when sending the first periodic signal on the second transmission resource, receive the fourth periodic signal sent by the fourth device on a seventh transmission resource, and receive the third periodic signal sent by the third device on an eighth transmission resource, wherein the seventh transmission resource and the second transmission resource are corresponding to different locations in the transmission pattern in time domain, and the eighth transmission resource and the second transmission resource are corresponding to different locations in the transmission pattern in time domain; or
the transmission module is further configured to:
when sending the first periodic signal on the first transmission resource, receive a third periodic signal sent by the third device on a fifth transmission resource, wherein the fifth transmission resource and the first transmission resource are corresponding to different locations in the transmission pattern in time domain; and the fourth device sends a fourth periodic signal on a sixth transmission resource, wherein the sixth transmission resource and the first transmission resource are corresponding to a same location in the transmission pattern in time domain; and
when sending the first periodic signal on the second transmission resource, receive the fourth periodic signal sent by the fourth device on the seventh transmission resource, wherein the seventh transmission resource and the second transmission resource are corresponding to different locations in the transmission pattern in time domain; and the third device sends the fourth periodic signal on the eighth transmission resource, wherein the eighth transmission resource and the second transmission resource are corresponding to a same location in the transmission pattern in time domain.

11. The first device according to any one of claims 7 to 10, wherein when the transmission module sends the status information, the transmission module further performs the following step:
sending a device identifier set, wherein the device identifier set comprises a device identifier of at least one fifth device, and the first device and the fifth device meet at least one of the following conditions:
a transmission resource occupied by the first device and a transmission resource occupied by the fifth device occupy a same frequency, and the transmission resource occupied by the first device and the transmission resource occupied by the fifth device are adjacent in time domain; or
when a transmission resource occupied by the fifth device is not in a dead zone of a transmission resource occupied by the first device, the fifth device and the first device are adjacent in physical location, and the dead zone indicates a set of resources that are corresponding to a same location in the transmission pattern in time domain as the resource occupied by the first device.

12. The first device according to any one of claims 7 to 11, wherein the processing module is specifically configured to:
select the first transmission resource and the second transmission resource from the transmission pattern according to a control signal received by the transmission module.

## Patentansprüche

1. Datenübertragungsverfahren, wobei das Verfahren umfasst:
Bestimmen (101) einer ersten Übertragungsressource und einer zweiten Übertragungsressource gemäß einem Übertragungsmuster durch eine erste Vorrichtung, wobei die erste Übertragungsressource und die zweite Übertragungsressource verschiedenen Positionen in dem Übertragungsmuster im Zeitbereich entsprechen; und
Senden (102) von Statusinformationen der ersten Vorrichtung an eine zweite Vorrichtung auf der ersten Übertragungsressource durch die erste Vorrichtung und Senden der Statusinformationen an die zweite Vorrichtung auf der zweiten Übertragungsressource, wobei eine erste Position und eine zweite Position während einer von zwei aufeinanderfolgenden Sendezeiten durch die erste Vorrichtung orthogonal im Zeitbereich sind, und/oder eine dritte Position und eine vierte Position während der anderen der beiden aufeinanderfolgenden Sendezeiten orthogonal im Zeitbereich sind; die erste Position eine Position ist, die sich im Übertragungsmuster befindet und der ersten Übertragungsressource entspricht, die zweite Position eine Position ist, die sich im Übertragungsmuster befindet und einer Ressource entspricht, die von der zweiten Vorrichtung während der einen Sendezeit belegt ist, die dritte Position eine Position ist, die sich im Übertragungsmuster befindet und der zweiten Übertragungsressource entspricht, und die vierte Position eine Position ist, die sich im Übertragungsmuster befindet und die einer Ressource entspricht, die von der zweiten Vorrichtung während der anderen Sendezeit belegt ist; und die erste Übertragungsressource und die zweite Übertragungsressource Ressourcen sind, die von der ersten Vorrichtung während der zwei aufeinanderfolgenden Sendezeiten der Statusinformationen verwendet werden;
**dadurch gekennzeichnet, dass**
das Übertragungsmuster eine Zeitachse und eine Frequenzachse umfasst, eine minimale Einheit, die durch einen Teilungswert der Zeitachse und einen Teilungswert der Frequenzachse im Übertragungsmuster gebildet wird, einer Übertragungsressource entspricht, die Zeitachse N Zeitpunkte (T₁, T₂,..., T_{N}) umfasst, die Frequenzachse N Frequenzpunkte (f₁, f₂,..., f_{N}) umfasst, und jede Gruppe von Koordinaten (Tₓ, f_{y}) im Übertragungsmuster einer Übertragungsressource entspricht; und
die erste Übertragungsressource ersten Koordinaten (Tᵢ, fⱼ) im Übertragungsmuster entspricht, die zweite Übertragungsressource zweiten Koordinaten (T_{(i+m)mod N}, fⱼ) im Übertragungsmuster entspricht, N, i, j, m, x und y alle positive ganze Zahlen sind, i, j, m, x und y jeweils nicht größer als N sind, und i+m≤N ist.

2. Verfahren nach Anspruch 1, wobei die von der ersten Vorrichtung während jeweiliger zwei aufeinanderfolgender Sendezeiten der Statusinformationen verwendeten Ressourcen verschiedenen Positionen im Übertragungsmuster im Zeitbereich entsprechen, und eine von der ersten Vorrichtung verwendete Ressource und eine von der zweiten Vorrichtung während mindestens einer der jeweiligen zwei aufeinanderfolgenden Sendezeiten verwendete Ressource verschiedenen Positionen im Übertragungsmuster im Zeitbereich entsprechen.

3. Verfahren nach Anspruch 1 oder 2, wobei die Statusinformationen ein erstes periodisches Signal umfassen, und wenn die erste Vorrichtung das erste periodische Signal auf der ersten Übertragungsressource sendet, sendet die zweite Vorrichtung ein zweites periodisches Signal auf einer dritten Übertragungsressource, und die dritte Übertragungsressource entspricht mindestens einer der dritten Koordinaten (Tᵢ, f_{(j+n)mod N}), vierten Koordinaten (T_{(i+k)mod N}, f_{(j+n)mod N)} oder fünften Koordinaten (T_{(i+k)mod N,} fⱼ) in dem Übertragungsmuster; oder
wenn die erste Vorrichtung das erste periodische Signal auf der zweiten Übertragungsressource sendet, die zweite Vorrichtung das zweite periodische Signal auf einer vierten Übertragungsressource sendet, und die vierte Übertragungsressource einer der dritten Koordinaten (Tᵢ, f_{(j+n)mod N}), der sechsten Koordinaten (T_{(i+k)mod N}, f_{(j+n)mod N}) oder der siebten Koordinaten (T_{(i+k)mod N}, fⱼ) im Übertragungsmuster entspricht, n und k positive ganze Zahlen sind, und k≠m in den siebten Koordinaten.

4. Verfahren nach Anspruch 3, wobei die zweite Vorrichtung eine dritte Vorrichtung und eine vierte Vorrichtung umfasst, und das Verfahren ferner umfasst:
beim Senden des ersten periodischen Signals auf der ersten Übertragungsressource, Empfangen eines dritten periodischen Signals, das von der dritten Vorrichtung auf einer fünften Übertragungsressource gesendet wird, durch die erste Vorrichtung, wobei die fünfte Übertragungsressource und die erste Übertragungsressource verschiedenen Positionen im Übertragungsmuster im Zeitbereich entsprechen; und Senden eines vierten periodischen Signals auf einer sechsten Übertragungsressource durch die vierte Vorrichtung, wobei die sechste Übertragungsressource und die erste Übertragungsressource einer gleichen Position im Übertragungsmuster im Zeitbereich entsprechen; und
beim Senden des ersten periodischen Signals auf der zweiten Übertragungsressource, Empfangen des vierten periodischen Signals, das von der vierten Vorrichtung auf einer siebten Übertragungsressource gesendet wird, durch die erste Vorrichtung und Empfangen des dritten periodischen Signals, das von der dritten Vorrichtung auf einer achten Übertragungsressource gesendet wird, wobei die siebte Übertragungsressource und die zweite Übertragungsressource verschiedenen Positionen im Übertragungsmuster im Zeitbereich entsprechen und die achte Übertragungsressource und die zweite Übertragungsressource verschiedenen Positionen im Übertragungsmuster im Zeitbereich entsprechen; oder
das Verfahren ferner umfasst:
beim Senden des ersten periodischen Signals auf der ersten Übertragungsressource, Empfangen eines dritten periodischen Signals, das von der dritten Vorrichtung auf einer fünften Übertragungsressource gesendet wird, durch die erste Vorrichtung, wobei die fünfte Übertragungsressource und die erste Übertragungsressource verschiedenen Positionen im Übertragungsmuster im Zeitbereich entsprechen; und Senden eines vierten periodischen Signals auf einer sechsten Übertragungsressource durch die vierte Vorrichtung, wobei die sechste Übertragungsressource und die erste Übertragungsressource einer gleichen Position im Übertragungsmuster im Zeitbereich entsprechen; und
beim Senden des ersten periodischen Signals auf der zweiten Übertragungsressource, Empfangen des vierten periodischen Signals, das von der vierten Vorrichtung auf der siebten Übertragungsressource gesendet wird, wobei die siebte Übertragungsressource und die zweite Übertragungsressource verschiedenen Positionen im Übertragungsmuster im Zeitbereich entsprechen; und Senden des vierten periodischen Signals auf der achten Übertragungsressource durch die dritte Vorrichtung, wobei die achte Übertragungsressource und die zweite Übertragungsressource einer gleichen Position im Übertragungsmuster im Zeitbereich entsprechen.

5. Verfahren nach einem der Ansprüche 1 bis 4, wobei, wenn die erste Vorrichtung die Statusinformationen sendet, die erste Vorrichtung ferner den folgenden Schritt ausführt:
Senden eines Vorrichtungskennungssatzes durch die erste Vorrichtung, wobei der Vorrichtungskennungssatz eine Vorrichtungskennung von mindestens einer fünften Vorrichtung umfasst, und die erste Vorrichtung und die fünfte Vorrichtung mindestens eine der folgenden Bedingungen erfüllen:
eine Übertragungsressource, die durch die erste Vorrichtung belegt ist, und eine Übertragungsressource, die durch die fünfte Vorrichtung belegt ist, eine gleiche Frequenz belegen, und die Übertragungsressource, die durch die erste Vorrichtung belegt ist, und die Übertragungsressource, die durch die fünfte Vorrichtung belegt ist, im Zeitbereich benachbart sind; oder
wenn sich eine durch die fünfte Vorrichtung belegte Übertragungsressource nicht in einer Totzone einer durch die erste Vorrichtung belegten Übertragungsressource befindet, sind die fünfte Vorrichtung und die erste Vorrichtung an einer physischen Position benachbart, und die Totzone zeigt einen Satz von Ressourcen an, die einer gleichen Position im Übertragungsmuster im Zeitbereich entsprechen wie die durch die erste Vorrichtung belegte Ressource.

6. Verfahren nach einem der Ansprüche 1 bis 5, wobei das Bestimmen einer ersten Übertragungsressource und einer zweiten Übertragungsressource gemäß einem Übertragungsmuster durch eine erste Vorrichtung insbesondere umfasst:
Auswählen der ersten Übertragungsressource und der zweiten Übertragungsressource aus dem Übertragungsmuster durch die erste Vorrichtung gemäß einem empfangenen Steuersignal.

7. Erste Vorrichtung, wobei die erste Vorrichtung umfasst:
ein Verarbeitungsmodul (401), das konfiguriert ist, um eine erste Übertragungsressource und eine zweite Übertragungsressource gemäß einem Übertragungsmuster zu bestimmen, wobei die erste Übertragungsressource und die zweite Übertragungsressource verschiedenen Positionen im Übertragungsmuster im Zeitbereich entsprechen; und
ein Übertragungsmodul (402), das konfiguriert ist, zum: Senden von Statusinformationen der ersten Vorrichtung an eine zweite Vorrichtung auf der ersten Übertragungsressource, die durch das Verarbeitungsmodul bestimmt wird, und Senden der Statusinformationen an die zweite Vorrichtung auf der zweiten Übertragungsressource, die durch das Verarbeitungsmodul bestimmt wird, wobei die erste Position und eine zweite Position während eines von zwei aufeinanderfolgenden Sendezeiten durch die erste Vorrichtung orthogonal im Zeitbereich sind, und/oder eine dritte Position und eine vierte Position während der anderen der beiden aufeinanderfolgenden Sendezeiten orthogonal im Zeitbereich sind; die erste Position eine Position ist, die sich im Übertragungsmuster befindet und der ersten Übertragungsressource entspricht, die zweite Position eine Position ist, die sich im Übertragungsmuster befindet und einer Ressource entspricht, die durch die zweite Vorrichtung während der einen Sendezeit belegt ist, die dritte Position eine Position ist, die sich im Übertragungsmuster befindet und der zweiten Übertragungsressource entspricht, und die vierte Position eine Position ist, die sich im Übertragungsmuster befindet und die einer Ressource entspricht, die durch die zweite Vorrichtung während der anderen Sendezeit belegt ist; und wobei die erste Übertragungsressource und die zweite Übertragungsressource Ressourcen sind, die von der ersten Vorrichtung während der zwei aufeinanderfolgenden Sendezeiten der Statusinformationen verwendet werden;
**dadurch gekennzeichnet, dass**
das Übertragungsmuster eine Zeitachse und eine Frequenzachse umfasst, eine minimale Einheit, die durch einen Teilungswert der Zeitachse und einen Teilungswert der Frequenzachse im Übertragungsmuster gebildet wird, einer Übertragungsressource entspricht, die Zeitachse N Zeitpunkte (T₁, T₂,..., T_{N}) umfasst, die Frequenzachse N Frequenzpunkte (f₁, f₂,..., f_{N}) umfasst, und jede Gruppe von Koordinaten (Tₓ, f_{y}) im Übertragungsmuster einer Übertragungsressource entspricht; und
die erste Übertragungsressource ersten Koordinaten (Tᵢ, fⱼ) im Übertragungsmuster entspricht, die zweite Übertragungsressource zweiten Koordinaten (T_{(i+m)mod N}, fⱼ) im Übertragungsmuster entspricht, N, i, j, m, x und y alle positive ganze Zahlen sind, i, j, m, x und y jeweils nicht größer als N sind, und i+m≤N ist.

8. Erste Vorrichtung nach Anspruch 7, wobei die vom Übertragungsmodul während jeweils zwei aufeinanderfolgenden Sendezeiten der Statusinformationen verwendeten Ressourcen verschiedenen Positionen im Übertragungsmuster im Zeitbereich entsprechen, und eine vom Übertragungsmodul verwendete Ressource und eine von der zweiten Vorrichtung während mindestens einer der jeweiligen zwei aufeinanderfolgenden Sendezeiten verwendete Ressource verschiedenen Positionen im Übertragungsmuster im Zeitbereich entsprechen.

9. Erste Vorrichtung nach Anspruch 7 oder 8, wobei die Statusinformation ein erstes periodisches Signal umfasst, und wenn das Übertragungsmodul das erste periodische Signal auf der ersten Übertragungsressource sendet, sendet die zweite Vorrichtung ein zweites periodisches Signal auf einer dritten Übertragungsressource, und die dritte Übertragungsressource entspricht mindestens einer der dritten Koordinaten (Tᵢ, f_{(j+n)mod N}), der vierten Koordinaten (T_{(i+k)mod N}, f_{(j+n)mod N}) oder der fünften Koordinaten (T_{(i+k)mod N}, fⱼ) in dem Übertragungsmuster; oder
wenn das Übertragungsmodul das erste periodische Signal auf der zweiten Übertragungsressource sendet, die zweite Vorrichtung das zweite periodische Signal auf einer vierten Übertragungsressource sendet, und die vierte Übertragungsressource einer der dritten Koordinaten (Tᵢ, f_{(j+n)mod N}), der sechsten Koordinaten (T_{(i+k)mod N}, f_{(j+n)mod N}) oder der siebten Koordinaten (T_{(i+k)mod N}, fⱼ) im Übertragungsmuster entspricht, n und k positive ganze Zahlen sind, und k≠m in den siebten Koordinaten.

10. Erste Vorrichtung nach Anspruch 9, wobei die zweite Vorrichtung eine dritte Vorrichtung und eine vierte Vorrichtung umfasst, und das Übertragungsmodul ferner konfiguriert ist zum: beim Senden des ersten periodischen Signals auf der ersten Übertragungsressource, Empfangen eines dritten periodischen Signals, das von der dritten Vorrichtung auf einer fünften Übertragungsressource gesendet wird, wobei die fünfte Übertragungsressource und die erste Übertragungsressource verschiedenen Positionen im Übertragungsmuster im Zeitbereich entsprechen; und die vierte Vorrichtung ein viertes periodisches Signal auf einer sechsten Übertragungsressource sendet, wobei die sechste Übertragungsressource und die erste Übertragungsressource einer gleichen Position im Übertragungsmuster im Zeitbereich entsprechen; und beim Senden des ersten periodischen Signals auf der zweiten Übertragungsressource das vierte periodische Signal empfangen, das von der vierten Vorrichtung auf einer siebten Übertragungsressource gesendet wird, und das dritte periodische Signal empfangen, das von der dritten Vorrichtung auf einer achten Übertragungsressource gesendet wird, wobei die siebte Übertragungsressource und die zweite Übertragungsressource verschiedenen Positionen im Übertragungsmuster im Zeitbereich entsprechen, und die achte Übertragungsressource und die zweite Übertragungsressource verschiedenen Positionen im Übertragungsmuster im Zeitbereich entsprechen; oder
das Übertragungsmodul ferner konfiguriert ist, zum:
beim Senden des ersten periodischen Signals auf der ersten Übertragungsressource, Empfangen eines dritten periodischen Signals, das von der dritten Vorrichtung auf einer fünften Übertragungsressource gesendet wird, wobei die fünfte Übertragungsressource und die erste Übertragungsressource verschiedenen Positionen im Übertragungsmuster im Zeitbereich entsprechen; und die vierte Vorrichtung ein viertes periodisches Signal auf einer sechsten Übertragungsressource sendet, wobei die sechste Übertragungsressource und die erste Übertragungsressource einer gleichen Position im Übertragungsmuster im Zeitbereich entsprechen;
und beim Senden des ersten periodischen Signals auf der zweiten Übertragungsressource, Empfangen des vierten periodischen Signals, das von der vierten Vorrichtung auf der siebten Übertragungsressource gesendet wird, wobei die siebte Übertragungsressource und die zweite Übertragungsressource verschiedenen Positionen im Übertragungsmuster im Zeitbereich entsprechen; und die dritte Vorrichtung das vierte periodische Signal auf der achten Übertragungsressource sendet, wobei die achte Übertragungsressource und die zweite Übertragungsressource einer gleichen Position im Übertragungsmuster im Zeitbereich entsprechen.

11. Erste Vorrichtung nach einem der Ansprüche 7 bis 10, wobei, wenn das Übertragungsmodul die Statusinformationen sendet, das Übertragungsmodul ferner den folgenden Schritt durchführt:
Senden eines Vorrichtungskennungssatzes, wobei der Vorrichtungskennungssatz einen Vorrichtungskennungswert von mindestens einer fünften Vorrichtung umfasst, und die erste Vorrichtung und die fünfte Vorrichtung mindestens eine der folgenden Bedingungen erfüllen:
eine Übertragungsressource, die durch die erste Vorrichtung belegt ist, und eine Übertragungsressource, die durch die fünfte Vorrichtung belegt ist, eine gleiche Frequenz belegen, und die Übertragungsressource, die durch die erste Vorrichtung belegt ist, und die Übertragungsressource, die durch die fünfte Vorrichtung belegt ist, im Zeitbereich benachbart sind; oder
wenn sich eine durch die fünfte Vorrichtung belegte Übertragungsressource nicht in einer Totzone einer durch die erste Vorrichtung belegten Übertragungsressource befindet, sind die fünfte Vorrichtung und die erste Vorrichtung an einer physischen Position benachbart, und die Totzone zeigt einen Satz von Ressourcen an, die einer gleichen Position im Übertragungsmuster im Zeitbereich entsprechen wie die durch die erste Vorrichtung belegte Ressource.

12. Erste Vorrichtung nach einem der Ansprüche 7 bis 11, wobei das Verarbeitungsmodul insbesondere konfiguriert ist zum:
Auswählen der ersten Übertragungsressource und der zweiten Übertragungsressource aus dem Übertragungsmuster gemäß einem vom Übertragungsmodul empfangenen Steuersignal.

## Revendications

1. Procédé de transmission de données, le procédé consistant à :
déterminer (101), par un premier dispositif, une première ressource de transmission et une deuxième ressource de transmission selon un schéma de transmission, la première ressource de transmission et la deuxième ressource de transmission correspondant à différentes localisations dans le schéma de transmission dans le domaine temporel ; et envoyer (102), par le premier dispositif, une information de statut du premier dispositif à un deuxième dispositif sur la première ressource de transmission, et envoyer l'information de statut au deuxième dispositif sur la deuxième ressource de transmission, une première localisation et une deuxième localisation étant orthogonales dans le domaine temporel pendant un premier moment d'envoi sur deux moments d'envoi consécutifs par le premier dispositif, et/ou une troisième localisation et une quatrième localisation étant orthogonales dans le domaine temporel pendant l'autre moment d'envoi sur deux moments d'envoi consécutifs ; la première localisation étant une localisation qui est dans le schéma de transmission et qui correspond à la première ressource de transmission, la deuxième localisation étant une localisation qui est dans le schéma de transmission et qui correspond à une ressource occupée par le deuxième dispositif pendant le premier moment d'envoi, la troisième localisation étant une localisation qui est dans le schéma de transmission et qui correspond à la deuxième ressource de transmission, et la quatrième localisation étant une localisation qui est dans le schéma de transmission et qui correspond à une ressource occupée par le deuxième dispositif pendant l'autre moment d'envoi ; et la première ressource de transmission et la deuxième ressource de transmission étant des ressources utilisées par le premier dispositif pendant les deux moments d'envoi consécutifs de l'information de statut ;
**caractérisé en ce que** :
le schéma de transmission comprend un axe de temps et un axe de fréquence, une unité minimale formée par une valeur de division de l'axe de temps et une valeur de division de l'axe de fréquence dans le schéma de transmission correspond à une ressource de transmission, l'axe de temps comprend N points de temps (T₁, T₂, ..., T_{N}), l'axe de fréquence comprend N points de fréquence (f₁, f₂, ..., f_{N}), et chaque groupe de coordonnées (Tₓ, f_{y}) dans le schéma de transmission correspond à une ressource de transmission ; et
la première ressource de transmission correspond à des premières coordonnées (Tᵢ, fⱼ) dans le schéma de transmission, la deuxième ressource de transmission correspond à des deuxièmes coordonnées (T_{(i+m)mod N}, fⱼ) dans le schéma de transmission, N, i, j, m, x et y sont tous des entiers positifs, i, j, m, x et y ne sont chacun pas supérieurs à N et i+m≤N.

2. Procédé selon la revendication 1, dans lequel des ressources utilisées par le premier dispositif pendant chaque paire de moments d'envoi consécutifs de l'information de statut correspondent à différentes localisations dans le schéma de transmission dans le domaine temporel, et une ressource utilisée par le premier dispositif et une ressource utilisée par le deuxième dispositif pendant au moins un moment de chaque paire de moments d'envoi consécutifs correspondent à différentes localisations dans le schéma de transmission dans le domaine temporel.

3. Procédé selon la revendication 1 ou 2, dans lequel l'information de statut comprend un premier signal périodique, et quand le premier dispositif envoie le premier signal périodique sur la première ressource de transmission, le deuxième dispositif envoie un deuxième signal périodique sur une troisième ressource de transmission, et la troisième ressource de transmission correspond à au moins des coordonnées parmi des troisièmes coordonnées (Ti, f_{(j+n)mod N}), des quatrièmes coordonnées (T_{(i+k)mod N}, f_{(j+n)mod N}) et des cinquièmes coordonnées (T_{(i+k)mod N}, fⱼ) dans le schéma de transmission ; ou
quand le premier dispositif envoie le premier signal périodique sur la deuxième ressource de transmission, le deuxième dispositif envoie le deuxième signal périodique sur une quatrième ressource de transmission, et la quatrième ressource de transmission correspond à des coordonnées parmi les troisièmes coordonnées (Tᵢ, f_{(j+n)mod N}), des sixièmes coordonnées (T_{(i+k)mod N}, f_{(j+n)mod N}) et des septièmes coordonnées (T_{(i+k)mod N}, fⱼ) dans le schéma de transmission, n et k sont des entiers positifs et k≠m dans les septièmes coordonnées.

4. Procédé selon la revendication 3, le deuxième dispositif comprenant un troisième dispositif et un quatrième dispositif, et le procédé consistant en outre à :
lors de l'envoi du premier signal périodique sur la première ressource de transmission, recevoir, par le premier dispositif, un troisième signal périodique envoyé par le troisième dispositif sur une cinquième ressource de transmission, la cinquième ressource de transmission et la première ressource de transmission correspondant à différentes localisations dans le schéma de transmission dans le domaine temporel ; et envoyer, par le quatrième dispositif, un quatrième signal périodique sur une sixième ressource de transmission, la sixième ressource de transmission et la première ressource de transmission correspondant à une même localisation dans le schéma de transmission dans le domaine temporel ; et
lors de l'envoi du premier signal périodique sur la deuxième ressource de transmission, recevoir, par le premier dispositif, le quatrième signal périodique envoyé par le quatrième dispositif sur une septième ressource de transmission, et recevoir le troisième signal périodique envoyé par le troisième dispositif sur une huitième ressource de transmission, la septième ressource de transmission et la deuxième ressource de transmission correspondant à différentes localisations dans le schéma de transmission dans le domaine temporel, et la huitième ressource de transmission et la deuxième ressource de transmission correspondant à différentes localisations dans le schéma de transmission dans le domaine temporel ; ou
le procédé consistant en outre à :
lors de l'envoi du premier signal périodique sur la première ressource de transmission, recevoir, par le premier dispositif, un troisième signal périodique envoyé par le troisième dispositif sur une cinquième ressource de transmission, la cinquième ressource de transmission et la première ressource de transmission correspondant à différentes localisations dans le schéma de transmission dans le domaine temporel ; et envoyer, par le quatrième dispositif, un quatrième signal périodique sur une sixième ressource de transmission, la sixième ressource de transmission et la première ressource de transmission correspondant à une même localisation dans le schéma de transmission dans le domaine temporel ; et
lors de l'envoi du premier signal périodique sur la deuxième ressource de transmission, recevoir, par le premier dispositif, le quatrième signal périodique envoyé par le quatrième dispositif sur la septième ressource de transmission, la septième ressource de transmission et la deuxième ressource de transmission correspondant à différentes localisations dans le schéma de transmission dans le domaine temporel ; et envoyer, par le troisième dispositif, le quatrième signal périodique sur la huitième ressource de transmission, la huitième ressource de transmission et la deuxième ressource de transmission correspondant à une même localisation dans le schéma de transmission dans le domaine temporel.

5. Procédé selon l'une quelconque des revendications 1 à 4, dans lequel, quand le premier dispositif envoie l'information de statut, le premier dispositif réalise en outre les étapes suivantes consistant à :
envoyer, par le premier dispositif, un ensemble d'identifiants de dispositif, l'ensemble d'identifiants de dispositif comprenant un identifiant de dispositif d'au moins un cinquième dispositif, et le premier dispositif et le cinquième dispositif satisfaisant à au moins une des conditions suivantes :
une ressource de transmission occupée par le premier dispositif et une ressource de transmission occupée par le cinquième dispositif occupent une même fréquence, et la ressource de transmission occupée par le premier dispositif et la ressource de transmission occupée par le cinquième dispositif sont adjacentes dans le domaine temporel ; ou
quand une ressource de transmission occupée par le cinquième dispositif n'est pas dans une zone morte d'une ressource de transmission occupée par le premier dispositif, le cinquième dispositif et le premier dispositif sont adjacents dans une localisation physique, et la zone morte indique un ensemble de ressources qui correspondent à une même localisation dans le schéma de transmission dans le domaine temporel que la ressource occupée par le premier dispositif.

6. Procédé selon l'une quelconque des revendications 1 à 5, dans lequel la détermination, par un premier dispositif, d'une première ressource de transmission et d'une deuxième ressource de transmission selon un schéma de transmission consiste spécifiquement à : sélectionner, par le premier dispositif, la première ressource de transmission et la deuxième ressource de transmission à partir du schéma de transmission selon un signal de contrôle reçu.

7. Premier dispositif, le premier dispositif comprenant :
un module de traitement (401), configuré pour déterminer une première ressource de transmission et une deuxième ressource de transmission selon un schéma de transmission, la première ressource de transmission et la deuxième ressource de transmission correspondant à différentes localisations dans le schéma de transmission dans le domaine temporel ; et
un module de transmission (402), configuré pour : envoyer une information de statut du premier dispositif à un deuxième dispositif sur la première ressource de transmission déterminée par le module de traitement, et envoyer l'information de statut au deuxième dispositif sur la deuxième ressource de transmission déterminée par le module de traitement, la première localisation et une deuxième localisation étant orthogonales dans le domaine temporel pendant un premier moment d'envoi sur deux moments d'envoi consécutifs par le premier dispositif, et/ou une troisième localisation et une quatrième localisation étant orthogonales dans le domaine temporel pendant l'autre moment d'envoi sur deux moments d'envoi consécutifs ; la première localisation étant une localisation qui est dans le schéma de transmission et qui correspond à la première ressource de transmission, la deuxième localisation étant une localisation qui est dans le schéma de transmission et qui correspond à une ressource occupée par le deuxième dispositif pendant le premier moment d'envoi, la troisième localisation étant une localisation qui est dans le schéma de transmission et qui correspond à la deuxième ressource de transmission, et la quatrième localisation étant une localisation qui est dans le schéma de transmission et qui correspond à une ressource occupée par le deuxième dispositif pendant l'autre moment d'envoi ; et la première ressource de transmission et la deuxième ressource de transmission étant des ressources utilisées par le premier dispositif pendant les deux moments d'envoi consécutifs de l'information de statut ;
**caractérisé en ce que** :
le schéma de transmission comprend un axe de temps et un axe de fréquence, une unité minimale formée par une valeur de division de l'axe de temps et une valeur de division de l'axe de fréquence dans le schéma de transmission correspond à une ressource de transmission, l'axe de temps comprend N points de temps (T₁, T₂, ..., T_{N}), l'axe de fréquence comprend N points de fréquence (f₁, f₂, ..., f_{N}), et chaque groupe de coordonnées (Tₓ, f_{y}) dans le schéma de transmission correspond à une ressource de transmission ; et
la première ressource de transmission correspond à des premières coordonnées (Tᵢ, fⱼ) dans le schéma de transmission, la deuxième ressource de transmission correspond à des deuxièmes coordonnées (T_{(i+m)mod N}, fⱼ) dans le schéma de transmission, N, i, j, m, x et y sont tous des entiers positifs, i, j, m, x et y ne sont chacun pas supérieurs à N et i+m≤N.

8. Premier dispositif selon la revendication 7, dans lequel des ressources utilisées par le module de transmission pendant chaque paire de moments d'envoi consécutifs de l'information de statut correspondent à différentes localisations dans le schéma de transmission dans le domaine temporel, et une ressource utilisée par le module de transmission et une ressource utilisée par le deuxième dispositif pendant au moins un moment de chaque paire de moments d'envoi consécutifs correspondent à différentes localisations dans le schéma de transmission dans le domaine temporel.

9. Premier dispositif selon la revendication 7 ou 8, dans lequel l'information de statut comprend un premier signal périodique, et quand le module de transmission envoie le premier signal périodique sur la première ressource de transmission, le deuxième dispositif envoie un deuxième signal périodique sur une troisième ressource de transmission, et la troisième ressource de transmission correspond à au moins des coordonnées parmi des troisièmes coordonnées (Tᵢ, f_{(j+n)mod N}), des quatrièmes coordonnées (T_{(i+k)mod N}, f_{(j+n)mod N)} et des cinquièmes coordonnées (T_{(i+k)mod N}, fⱼ) dans le schéma de transmission ; ou
quand le module de transmission envoie le premier signal périodique sur la deuxième ressource de transmission, le deuxième dispositif envoie le deuxième signal périodique sur une quatrième ressource de transmission, et la quatrième ressource de transmission correspond à des coordonnées parmi les troisièmes coordonnées (Tᵢ, f_{(j+n)mod N}), des sixièmes coordonnées (T_{(i+k)mod N}, f_{(j+n)mod N}) et des septièmes coordonnées (T_{(i+k)mod N}, fⱼ) dans le schéma de transmission, n et k sont des entiers positifs et k≠m dans les septièmes coordonnées.

10. Premier dispositif selon la revendication 9, le deuxième dispositif comprenant un troisième dispositif et un quatrième dispositif, et le module de transmission étant en outre configuré pour :
lors de l'envoi du premier signal périodique sur la première ressource de transmission, recevoir un troisième signal périodique envoyé par le troisième dispositif sur une cinquième ressource de transmission, la cinquième ressource de transmission et la première ressource de transmission correspondant à différentes localisations dans le schéma de transmission dans le domaine temporel ; et le quatrième dispositif envoie un quatrième signal périodique sur une sixième ressource de transmission, la sixième ressource de transmission et la première ressource de transmission correspondant à une même localisation dans le schéma de transmission dans le domaine temporel ; et
lors de l'envoi du premier signal périodique sur la deuxième ressource de transmission, recevoir le quatrième signal périodique envoyé par le quatrième dispositif sur une septième ressource de transmission, et recevoir le troisième signal périodique envoyé par le troisième dispositif sur une huitième ressource de transmission, la septième ressource de transmission et la deuxième ressource de transmission correspondant à différentes localisations dans le schéma de transmission dans le domaine temporel, et la huitième ressource de transmission et la deuxième ressource de transmission correspondant à différentes localisations dans le schéma de transmission dans le domaine temporel ; ou
le module de transmission étant en outre configuré pour :
lors de l'envoi du premier signal périodique sur la première ressource de transmission, recevoir un troisième signal périodique envoyé par le troisième dispositif sur une cinquième ressource de transmission, la cinquième ressource de transmission et la première ressource de transmission correspondant à différentes localisations dans le schéma de transmission dans le domaine temporel ; et le quatrième dispositif envoie un quatrième signal périodique sur une sixième ressource de transmission, la sixième ressource de transmission et la première ressource de transmission correspondant à une même localisation dans le schéma de transmission dans le domaine temporel ; et
lors de l'envoi du premier signal périodique sur la deuxième ressource de transmission, recevoir le quatrième signal périodique envoyé par le quatrième dispositif sur la septième ressource de transmission, la septième ressource de transmission et la deuxième ressource de transmission correspondant à différentes localisations dans le schéma de transmission dans le domaine temporel ; et le troisième dispositif envoie le quatrième signal périodique sur la huitième ressource de transmission, la huitième ressource de transmission et la deuxième ressource de transmission correspondant à une même localisation dans le schéma de transmission dans le domaine temporel.

11. Premier dispositif selon l'une quelconque des revendications 7 à 10, dans lequel, quand le module de transmission envoie l'information de statut, le module de transmission réalise en outre les étapes suivantes consistant à :
envoyer un ensemble d'identifiants de dispositif, l'ensemble d'identifiants de dispositif comprenant un identifiant de dispositif d'au moins un cinquième dispositif, et le premier dispositif et le cinquième dispositif satisfaisant à au moins une des conditions suivantes :
une ressource de transmission occupée par le premier dispositif et une ressource de transmission occupée par le cinquième dispositif occupent une même fréquence, et la ressource de transmission occupée par le premier dispositif et la ressource de transmission occupée par le cinquième dispositif sont adjacentes dans le domaine temporel ; ou
quand une ressource de transmission occupée par le cinquième dispositif n'est pas dans une zone morte d'une ressource de transmission occupée par le premier dispositif, le cinquième dispositif et le premier dispositif sont adjacents dans une localisation physique, et la zone morte indique un ensemble de ressources qui correspondent à une même localisation dans le schéma de transmission dans le domaine temporel que la ressource occupée par le premier dispositif.

12. Premier dispositif selon l'une quelconque des revendications 7 à 11, dans lequel le module de traitement est spécifiquement configuré pour :
sélectionner la première ressource de transmission et la deuxième ressource de transmission à partir du schéma de transmission selon un signal de contrôle reçu par le module de transmission.
